# EUROPEAN PATENT SPECIFICATION

(11) **EP 3 297 466 B1**
(45) Date of publication and mention of the grant of the patent: **11.11.2020**
(21) Application number: 16725420.0
(22) Date of filing: 16.05.2016
(51) Int. Cl.: A24F 47/00

(54) **AN AEROSOL GENERATING DEVICE AND CAPSULE**
AEROSOLERZEUGUNGSVORRICHTUNG UND -KAPSEL
DISPOSITIF DE GÉNÉRATION D'AÉROSOL ET CAPSULE

(30) Priority: 19.05.2015 EP 15168224
(43) Date of publication of application: 28.03.2018
(73) Proprietor: JT International SA, 1202 Geneva (CH)
(72) Inventor: CARROLL, James Thomas, Tullamore Co. Offaly (IE); BRYCE, Lyndsey Alice, Inch Island Co. Donegal (IE); MURPHY, Christopher William, Summerhill Co. Meath (IE)
(74) Representative: Gill Jennings & Every LLP
(86) International application number: PCT/EP2016/060934
(87) International publication number: WO 2016/184824

(56) References cited:
- EP-A1- 1 736 065
- EP-A1- 1 736 065
- US-A1- 2013 213 418
- US-A1- 2013 213 418

## Description

The present invention relates to an aerosol generating device and a capsule for use with the aerosol generating device.

Aerosol generating devices such as electronic cigarettes are relatively well known and are becoming increasingly popular. The most common operating principle for such electronic cigarettes is to provide a flavoured vapour to a user without burning material. They often comprise an electrically powered heat source and a reservoir of liquid, whereby the vapour is produced by delivering the liquid to the heat source.

Since the liquid is depleted during this process, after a certain amount of use the reservoir is emptied. Accordingly, prior art electronic cigarettes often provide a replaceable cartridge containing the heater and liquid reservoir which may be discarded and replaced when necessary. There are however several on-going problems which such conventional devices. Prior art devices can be found in the following publications: US 2013/0213418 A1 and EP 1736065 A1.

Firstly, prior art devices often locate the reservoir of aerosol-producing substance inside a removable cartridge such that there is no easy way for a user to determine the amount of aerosol generating substance remaining in the reservoir during use. This may result in continued use of the device after the substance has been depleted, resulting in an unpleasant flavour for the user. It also may result in the cartridge being depleted unexpectedly, at which time it may be difficult for the user to purchase further cartridges to continue use. Therefore there exists a need for a cartridge arrangement which allows for a user to easily determine the amount of aerosol producing substance remaining in the reservoir.

Prior art cartridges are generally configured to screw into one end of the aerosol generating device in order to connect to the battery and other components located in the body. Such an arrangement results in a substantial increase in the dimensions of the device making them large, bulky and awkward to use. The placement of the cartridge at one end of the device also means that this end cannot be utilised for another component such as an opening for a replaceable battery or the mouthpiece.

Some prior art devices seek to solve this problem by providing an aerosol generating device which may be opened to allow replacement of an internal cartridge containing the reservoir. However such an arrangement often requires a cumbersome operation involving the handling of small parts and the exposure of the delicate internal components of the device. Furthermore prior art devices often require that the capsule is screwed into the body, or that components of the body are screwed together after replacement of the internal capsule. After repeated use the screw threads are subject to wear, leading to failure and replacement is required.

There accordingly exists a need for an aerosol generating device and capsule wherein the capsule may be loaded externally in a straightforward operation, without the need to open or unscrew components of the device. There also exists a need for the capsule to remain partially exposed such that a user may gauge the amount of substance remaining in the capsule. Importantly, these benefits must be obtained without the detrimental effect common to prior art external capsules, namely, it must also not substantially increase the dimensions of the device so as to render it cumbersome to use.

The present invention seeks to provide an aerosol generating device and replaceable capsule that may be replaced in a user-friendly manner that overcomes the problems of the prior art.

According to the present invention there is provided an aerosol generating device and a capsule adapted for use with the aerosol generating device. The aerosol generating device comprises: an elongate body having a first end and a second end, a capsule that contains an aerosol generating substance, and a cavity positioned on one side of the elongate body of the aerosol generating device; wherein the cavity hosts the capsule, and wherein the cavity and capsule are configured such that, when the capsule is hosted in the cavity, the capsule lies along an elongate side of the elongate body and does not extend beyond the first and second ends. The capsule comprises an external shell arranged to retain an aerosol generating substance; and an outlet in the external shell configured to engage with the aerosol generating device when the capsule is retained in the cavity.

With the aerosol generating device and capsule according to the present invention it is possible to provide a means of replenishing an aerosol generating substance by replacing a capsule which does not require any disassembly of the device or unscrewing of components with a straightforward and user-friendly procedure. The capsule is loaded externally but does not substantially increase the dimensions of the device, providing a device which is easy to handle in use. The ends of the device are also left free allowing for use with other components of the device such as a mouthpiece and battery. Furthermore, the capsule remains at least partially external to the device allowing the user to gauge the remaining aerosol generating substance contained within. Utilising a capsule which remains at least partially exposed also allows for a greater proportion of the internal volume of the device to be devoted to storing the battery such that the size (and therefore lifetime) of the battery may be increased without impacting on the overall size of the body.

One example of the present invention will now be described with reference to the accompanying drawings, in which:
Figure 1 shows a bottom perspective view of a separate aerosol generating device and capsule according to the present invention; and
Figure 2 shows am top perspective view of an aerosol generating device according to the present invention with a capsule hosted in the device.

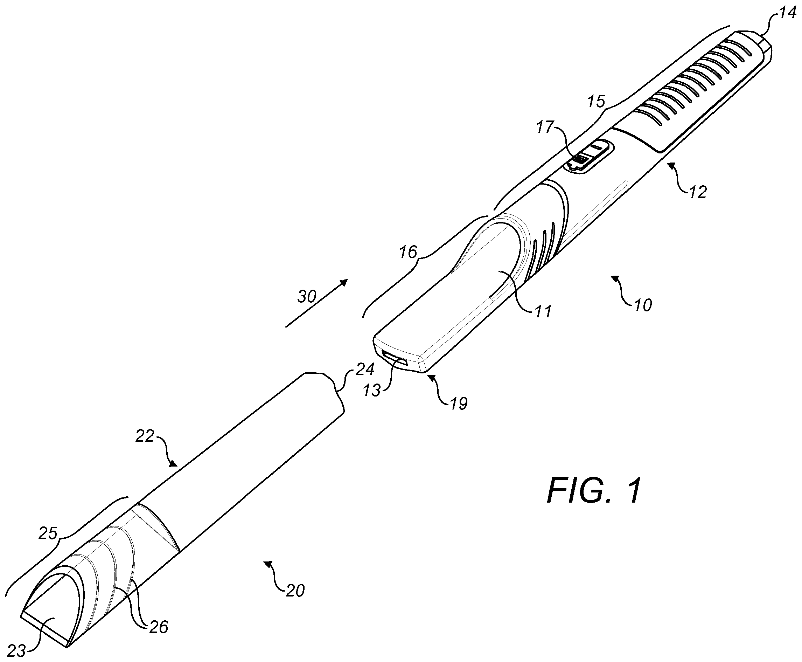

Referring to figure 1, an example of an aerosol generating device 10 according to the present invention comprises an elongate body 12 with a first 13 and second 14 end. The aerosol generating device further comprises a cavity 11 positioned on an elongate side of the body 12 between the first 13 and second 14 end. Figure 1 further shows a capsule 20, configured to contain an aerosol generating substance, according to the present invention, also having an elongate body 22 between a first 23 and second 24 end. The shape of the cavity 11 of the aerosol generating device 10 and the shape of the capsule 20 are configured such that the capsule may be inserted into the cavity 11 of the aerosol generating device 10 along a direction 30 approximately parallel with the elongate axis of the body 12. The capsule may then be hosted in the cavity 11 such that it lies closely along an elongate side of the aerosol generating device 10 and does not extend beyond the first 13 or second 14 ends.

In the exemplary aerosol generating device 10 of figure 1, the body 12 of the aerosol generating device 10 has a substantially circular or elliptical cross section along a first portion 15 of its length such that, along this portion 15, the device has an approximately cylindrical shape. The second, remaining portion 16 of the body has a reduced cross sectional area of approximately semi-circular shape. The complete shape of the body 12 can thus be approximated by the remaining volume after removing an approximately semi-cylindrical portion 16 from a partial length of a cylinder. An axially aligned cavity 11 is thus formed in the first cylindrical portion 15 of the device by an opening 11 at the interface between these two portions.

The body 22 of the capsule 20 also has an approximately semi-cylindrical shape with a cross section closely matching that of the axially aligned cavity 11 in the aerosol generating device 10 such that the capsule 10 may be inserted along insertion direction 30 and be retained securely in the cavity 11. The lengths of the cavity 11 and capsule 10 may be chosen such that a portion of the capsule may remain exposed, external to the body 12 of the aerosol generating device 10 but also so that the exposed length is less than the distance between the cavity 11 and first end 13 of the device such that no part of the capsule 11 extends past the first end 13 of the device when hosted.

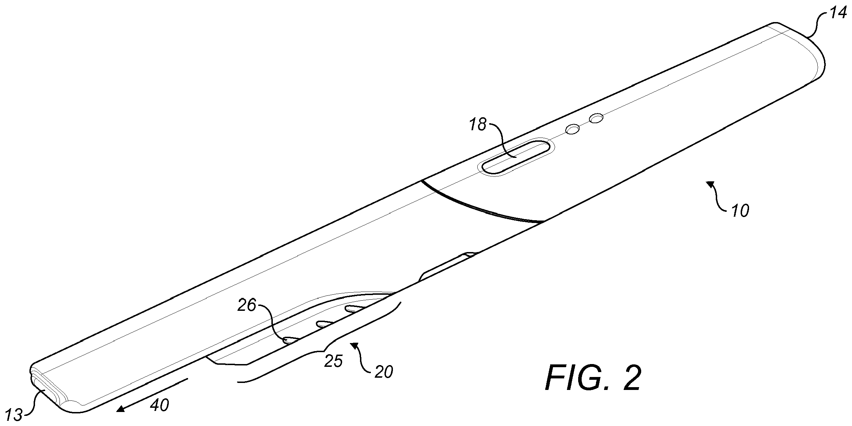

As shown in figure 2, this configuration results in the hosted capsule 20 lying closely against the body 12 of the aerosol generating device and therefore the capsule does not substantially extend the dimensions of the device in any one direction. That is, the hosted capsule, although partially external to the body of the aerosol generating device, lies within the volume defined by the length and maximum cross section of the aerosol generating device.

Although an approximately cylindrical shaped assembly has been used to illustrate this concept, it will be clear that any other appropriate shape may be chosen for the body 12 of the aerosol generating device, the capsule 20 and the cavity 11, such that the hosted capsule lies against the body of the aerosol generating device in this way.

A portion 25 of the capsule shell may be constructed from transparent material such that the amount of aerosol generating substance remaining within the capsule may be visually gauged by a user. The transparent portion 25 may also substantially correspond to the portion of the capsule that is exposed when it is hosted in the device, as shown in figure 2. In this way, a user may equally visually gauge the remaining aerosol generating substance within the capsule when the capsule is hosted in the cavity of the aerosol generating device. Such an arrangement provides a much more cost effective option than providing transparent windows embedded or engraved in the body of the aerosol generating device itself in order to see through to gauge the remaining liquid contained within.

Since a portion of the capsule 25 is exposed when hosted in the cavity, the capsule 10 may be simply removed by applying a force against the capsule in a direction 40 opposite to the insertion direction. This process may be facilitated by an array of ridges 26 disposed on the outward facing surface of the exposed capsule portion 25 forming a grip to which a lateral force may be applied. This provides a user-friendly capsule removal procedure which may be achieved simply using one hand.

The aerosol generating device may further comprise a retention means (not shown) disposed within the cavity 11, such as a clip mechanism, to further secure the capsule when hosted in the cavity 11. The aerosol generating device may further be provided with a corresponding release means, such as a capsule release button 17, configured to release the retention means such that the capsule may be removed by a user-applied force to the capsule. Alternatively it may be partially ejected by the release of a biased spring component when the button 17 is pressed.

The aerosol generating device may further comprise a mouthpiece 19, an internal heater assembly (not shown), a power source such as a battery occupying part of the first portion of the device 15 and providing power to the heater assembly, a substance transfer means configured to draw an aerosol generating substance to the heater and a heater control means activated by a button 18 on the body of the aerosol generating device.

The substance transfer means may further include an inlet valve at the base of the cavity 11 in fluidic connection to the heater assembly. The inlet valve may be configured to engage an outlet at the end 24 of the capsule 20 when hosted in the cavity 11. Therefore, when a user inserts the capsule 20 into the cavity 11, the outlet of the capsule engages the inlet valve of the substance transfer means, forming a channel between the capsule and heater assembly through which an aerosol generating substance may be drawn. Thus, by drawing on the mouthpiece 13 whilst activating the heater control button 18, the aerosol generating substance is delivered to the activated heater assembly producing an aerosol that may be inhaled by the user through the mouthpiece 13.

The provision of the cavity 11 on the side of the device 20 means that the ends 13, 14 are left free to facilitate use with one or more of the above components. For example, the mouthpiece may be placed at one end 13 and the battery may be replaced through the second end 14, which is not possible in prior art devices in which a cartridge is attached to one of the ends of the device.

The aerosol generating device according to the present invention may further comprise recognition means configured to read capsule type information provided by the capsule when hosted in the cavity. This capsule type information may include the type of aerosol generating substance contained within the capsule and the specific heating parameters (such as temperature and duration of heating) to be used. In this way, the appropriate heating parameters for the specific substance contained in the capsule 20 may be applied by the aerosol generating device 10 to provide an optimally produced aerosol to the user.

The capsule type information may be encoded onto the capsule in the number, size and/or spatial distribution of the gripping ridges 26 provided on the capsule shell. The recognition means of the aerosol generating device may then comprise a pressure sensitive region on an inner surface of the cavity configured to read the number and distribution of ridges 26 and interpret this information to apply the correct heating parameters to the corresponding aerosol generating substance.

Although this is one example, the provision of capsule type information on the capsule and recognition means of the aerosol generating device may be realised in a number of different ways to provide the effect of heating settings adapted to the specific aerosol substance contained within the capsule 20. For example chemical marking such as secure ink could be used instead of encoding the information in the gripping means. Furthermore electromagnetic marking such as RFID, NFC or a barcode may be used which may be read by a corresponding recognition means of the aerosol generating device.

The electromagnetic marking means and corresponding recognition means of the device may also be used to send a message, for example to a user's mobile telephone, to provide information on the remaining substance within the capsule or to inform a user that a non-genuine capsule is being used.

The cavity may further comprise (either as part of the recognition means or via alternative components) means to ensure that only the genuine capsule configured to operate with the aerosol generating device may be accepted by the cavity to function with the device. This feature may take the form of specific internal grooves or thread which are configured to only accept the capsule designed for use with the device. Similarly the electromagnetic marking may include a specific signal provided to the heater assembly to permit it to function only with the designated capsule or for it to function in a basic mode when a non-genuine capsule is inserted.

The heater control button 18 may further be provided with fingerprint recognition means such that the heater assembly is only operable when the correct fingerprint is recognised by the button 18, such that a device may only be used by a designated user.

In a further example of the invention, the heating means are provided in the capsule 20 rather than the aerosol generating device 10 such that an appropriate heating assembly to the specific substance may be provided and the heater may be changed regularly and easily with the capsule 20, rather than the aerosol generating device 10 itself requiring regular maintenance. In such an embodiment, the capsule 20 may further comprise electrical connections, configured to engage with those of the battery within the aerosol generating device. The capsule heater may further take the form of a portion of the capsule constructed from a material configured to react to an inductive or conductive heating. In such an example, when inserted into the cavity, the capsule may be pierced by a needle having an internal channel allowing the vapour, generated in the capsule, to pass from the capsule to the mouthpiece of the aerosol generating device with the substance transfer means adapted to the passage of vapour rather than liquid.

The examples of the present invention described above provide an aerosol generating device 10 and capsule 20 configured for use with the device which overcome several of the problems of prior art devices. In particular the capsule is hosted in a cavity 11 on a side of the device such that the ends 13, 14 are free to accommodate further components of the device such as the mouthpiece 19 and removable battery. Importantly, when hosted, the capsule may remain partially exposed, external to the body of the aerosol generating device 10, without substantially extending the mentions of the aerosol generating device 10. Therefore a user may benefit from the advantages of an exposed capsule 20 such as the ability to easily remove and replace the capsule, the possibility of identifying the remaining substance within the capsule through a transparent external portion and leaving a greater proportion of the inner volume free to host a larger battery. These advantages are achieved without the common adverse effects of an external capsule, namely the extended dimensions of the device resulting in a bulky object which is awkward to use. This is achieved since the hosted capsule is wholly contained within a volume defined by the length and maximum width of the aerosol generating device.

## Claims

1. An aerosol generating device comprising:
an elongate body (12) having a first end (13) and a second end (14), a capsule (20) that contains an aerosol generating substance, and a cavity (11) positioned on one side of the elongate body (12) of the aerosol generating device; wherein the cavity (11) hosts the capsule (20), and wherein the cavity (11) and capsule (20) are configured such that, when the capsule (20) is hosted in the cavity (11), the capsule (20) lies along an elongate side of the elongate body (12) and **characterized in that** the capsule (20) does not extend beyond the first and second ends (13, 14).

2. The aerosol generating device of any preceding claim wherein the cavity (11) and capsule (20) are configured such that, when the capsule (20) is hosted in the cavity (11), the capsule (20) remains at least partially exposed, external to the elongate body (12).

3. The aerosol generating device of claim 1 or 2, wherein
the cavity (11) is positioned on an elongate side of the elongate body (12).

4. The aerosol generating device of any of claims 2 to 4 wherein the cavity (11) is arranged such that the capsule (20) is inserted in a direction substantially parallel to the elongate axis of the elongate body (12).

5. The aerosol generating device of any preceding claim, wherein the elongate body (12) further comprises:
a mouthpiece (19) at the first end (13) of the elongate body (12);
a power source;
a heater assembly;
a heater control means (18) for selectively supplying power from the power source to the heater assembly;
a substance transfer means for controllable drawing the substance from the capsule (20) through the cavity (11) to the heater assembly; such that,
when power is supplied to the heater together with the substance, an aerosol is generated which may be drawn through the mouthpiece (19).

6. The aerosol generating device of any preceding claim further comprising:
retention means for releasably retaining the capsule (20) in the cavity (11); and
release means (17) for releasing the retention means such that the capsule (20) may be removed from the cavity (11).

7. The aerosol generating device of any preceding claim further comprising:
a recognition means configured to read capsule type information associated with the capsule (20); wherein the capsule type information comprises at least one of
the type of aerosol generating substance retained in the capsule (20);
the heating temperature and duration of heating to be applied to the substance; and
the volume of aerosol generating substance retained in the capsule (20).

8. The aerosol generating device of claim 7, wherein the capsule (20) further comprises:
identification means configured to be read by the recognition means of the aerosol generating device and provide capsule type information to the aerosol generating device when the capsule (20) is hosted in the cavity (11); wherein the capsule type information comprises at least one of
the type of aerosol generating substance retained in the capsule (20);
the heating temperature and duration of heating to be applied to the substance; and
the volume of aerosol generating substance retained in the capsule (20).

9. The aerosol generating device of any preceding claim, wherein the capsule (20) comprises:
an external shell arranged to retain the aerosol generating substance; and
an outlet in the external shell configured to engage with the aerosol generating device when the capsule (20) is retained in the cavity (11).

10. The aerosol generating device of claim 9 wherein a portion of the external shell of the capsule (20) is transparent such that a substance contained therein is visible to a user, the transparent portion being at least partially exposed when the capsule (20) is hosted in the cavity (11) of the aerosol generating device.

11. The aerosol generating device of claim 9 or 10, further comprising gripping means (26) arranged on the external shell of the capsule (20), the gripping means (26) configured so as to improve the ease with which the user may apply the required force to the capsule (20) in order to remove the capsule (20) from the cavity (11) of the aerosol generating device.

12. The aerosol generating device of claim 11 wherein the identification means is provided by the gripping means (26), the capsule type information being encoded in at least one of:
the number of gripping means (26) on the external shell; and
the positions of the gripping means (26) relative to a reference point on the external shell.

13. The aerosol generating device of any preceding claim, wherein the capsule (20) further comprises:
a heating assembly; and
electrical connections configured to connect the heating assembly to the power source of the aerosol generating device when the capsule (20) is hosted in the cavity (11).

14. The aerosol generating device of any preceding claim wherein part of the capsule (20) is made of a material able to react to an induction or conduction heating.

## Patentansprüche

1. Aerosolerzeugungsvorrichtung, die Folgendes umfasst:
einen länglichen Körper (12) mit einem ersten Ende (13) und einem zweiten Ende (14), eine Kapsel (20), die eine Aerosolerzeugungssubstanz enthält, und einen Hohlraum (11), der auf einer Seite des länglichen Körpers (12) der Aerosolerzeugungsvorrichtung angeordnet ist;
wobei der Hohlraum (11) die Kapsel (20) aufnimmt und wobei der Hohlraum (11) und die Kapsel (20) so konfiguriert sind, dass, wenn die Kapsel (20) in dem Hohlraum (11) aufgenommen ist, die Kapsel (20) entlang einer länglichen Seite des länglichen Körpers (12) liegt, **dadurch gekennzeichnet, dass** sich die Kapsel (20) nicht über das erste und zweite Ende (13, 14) hinaus erstreckt.

2. Aerosolerzeugungsvorrichtung nach einem der vorangehenden Ansprüche, wobei der Hohlraum (11) und die Kapsel (20) so konfiguriert sind, dass, wenn die Kapsel (20) in dem Hohlraum (11) untergebracht ist, die Kapsel (20) zumindest teilweise außerhalb des länglichen Körpers (12) freiliegt.

3. Aerosolerzeugungsvorrichtung nach Anspruch 1 oder 2, wobei der Hohlraum (11) auf einer länglichen Seite des länglichen Körpers (12) angeordnet ist.

4. Aerosolerzeugungsvorrichtung nach einem der Ansprüche 2 bis 4, wobei der Hohlraum (11) so angeordnet ist, dass die Kapsel (20) in einer Richtung eingeführt wird, die im Wesentlichen parallel zur Längsachse des länglichen Körpers (12) ist.

5. Aerosolerzeugungsvorrichtung nach einem der vorangehenden Ansprüche, wobei der längliche Körper (12) ferner Folgendes umfasst:
ein Mundstück (19) am ersten Ende (13) des länglichen Körpers (12);
eine Stromquelle;
eine Heizanordnung;
ein Heizsteuerungsmittel (18) zum selektiven Zuführen von Strom von der Stromquelle zur Heizanordnung;
Substanzübertragungsmittel zum steuerbaren Ziehen der Substanz aus der Kapsel (20) durch den Hohlraum (11) zur Heizanordnung;
so dass, wenn dem Heizgerät zusammen mit der Substanz Strom zugeführt wird, ein Aerosol erzeugt wird, das durch das Mundstück (19) gezogen werden kann.

6. Aerosolerzeugungsvorrichtung nach einem der vorangehenden Ansprüche, die ferner Folgendes umfasst:
Haltemittel zum lösbaren Halten der Kapsel (20) im Hohlraum (11); und
Freigabemittel (17) zum Lösen des Haltemittels, so dass die Kapsel (20) aus dem Hohlraum (11) entnommen werden kann.

7. Aerosolerzeugungsvorrichtung nach einem der vorangehenden Ansprüche, die ferner Folgendes umfasst:
ein Erkennungsmittel, das konfiguriert ist, um mit der Kapsel (20) assoziierte Informationen zum Kapseltyp zu lesen;
wobei die Informationen zum Kapseltyp mindestens eine der in der Kapsel (20) gehaltenen Arten von Aerosolerzeugungssubstanz umfassen;
die Heiztemperatur und die Dauer der Erwärmung, die auf die Substanz anzuwenden sind; und
das Volumen der Aerosolerzeugungssubstanz, die in der Kapsel (20) gehalten wird.

8. Aerosolerzeugungsvorrichtung nach Anspruch 7, wobei die Kapsel (20) ferner Folgendes umfasst:
Identifikationsmittel, das konfiguriert ist, um von dem Erkennungsmittel der Aerosolerzeugungsvorrichtung gelesen zu werden und der Aerosolerzeugungsvorrichtung Informationen zum Kapseltyp zu liefern, wenn die Kapsel (20) in dem Hohlraum (11) untergebracht ist;
wobei die Informationen zum Kapseltyp mindestens eine der in der Kapsel (20) gehaltenen Arten von Aerosolerzeugungssubstanz umfassen;
die Heiztemperatur und die Dauer der Erwärmung, die auf die Substanz anzuwenden sind; und
das Volumen der Aerosolerzeugungssubstanz, die in der Kapsel (20) gehalten wird.

9. Aerosolerzeugungsvorrichtung nach einem der vorangehenden Ansprüche, wobei die Kapsel (20) Folgendes umfasst:
eine äußere Hülle, die angeordnet ist, um die Aerosolerzeugungssubstanz zu halten; und
einen Auslass in der äußeren Hülle, der konfiguriert ist, um mit der Aerosolerzeugungsvorrichtung in Eingriff zu kommen, wenn die Kapsel (20) im Hohlraum (11) gehalten wird.

10. Aerosolerzeugungsvorrichtung nach Anspruch 9, wobei ein Abschnitt der äußeren Hülle der Kapsel (20) transparent ist, so dass eine darin enthaltene Substanz für einen Benutzer sichtbar ist, wobei der transparente Abschnitt zumindest teilweise freigelegt ist, wenn die Kapsel (20) in dem Hohlraum (11) der Aerosolerzeugungsvorrichtung untergebracht ist.

11. Aerosolerzeugungsvorrichtung nach Anspruch 9 oder 10, die ferner Greifmittel (26) umfasst, die an der äußeren Hülle der Kapsel (20) angeordnet sind, wobei die Greifmittel (26) konfiguriert sind, um die Leichtigkeit zu verbessern, mit der der Benutzer die erforderliche Kraft auf die Kapsel (20) ausüben kann, um die Kapsel (20) aus dem Hohlraum (11) der Aerosolerzeugungsvorrichtung zu entfernen.

12. Aerosolerzeugungsvorrichtung nach Anspruch 11, wobei das Identifikationsmittel durch die Greifmittel (26) bereitgestellt ist, wobei die Informationen zum Kapseltyp in mindestens einem aus Folgendem kodiert sind:
Anzahl der Greifmittel (26) an der Außenhülle; und
die Positionen der Greifmittel (26) in Bezug auf einen Referenzpunkt auf der äußeren Hülle.

13. Aerosolerzeugungsvorrichtung nach einem der vorangehenden Ansprüche, wobei die Kapsel (20) ferner Folgendes umfasst:
eine Heizanordnung; und
elektrische Verbindungen, die konfiguriert sind, um die Heizanordnung mit der Stromquelle der Aerosolerzeugungsvorrichtung zu verbinden, wenn die Kapsel (20) in dem Hohlraum (11) untergebracht ist.

14. Aerosolerzeugungsvorrichtung nach einem der vorangehenden Ansprüche, wobei ein Teil der Kapsel (20) aus einem Material hergestellt ist, das in der Lage ist, auf eine Induktions- oder Konduktionserwärmung zu reagieren.

## Revendications

1. Dispositif de production d'aérosol comprenant :
un corps allongé (12) présentant une première extrémité (13) et une seconde extrémité (14), une capsule (20) qui contient une substance de production d'aérosol et une cavité (11) positionnée sur un côté du corps allongé (12) du dispositif de production d'aérosol ;
la cavité (11) recevant la capsule (20), la cavité (11) et la capsule (20) étant conçues de telle sorte que, lorsque la capsule (20) est reçue dans la cavité (11), la capsule (20) se trouve le long d'un côté allongé du corps allongé (12), et **caractérisé en ce que** la capsule (20) ne s'étend pas au-delà des première et seconde extrémités (13, 14).

2. Dispositif de production d'aérosol selon la revendication précédente, dans lequel la cavité (11) et la capsule (20) sont conçues de telle sorte que, lorsque la capsule (20) est reçue dans la cavité (11), la capsule (20) reste au moins partiellement exposée, à l'extérieur du corps allongé (12).

3. Dispositif de production d'aérosol selon la revendication 1 ou 2, dans lequel la cavité (11) est positionnée sur un côté allongé du corps allongé (12).

4. Dispositif de production d'aérosol selon l'une quelconque des revendications 2 à 4, dans lequel la cavité (11) est agencée de telle sorte que la capsule (20) soit insérée dans une direction sensiblement parallèle à l'axe allongé du corps allongé (12).

5. Dispositif de production d'aérosol selon l'une quelconque des revendications précédentes, dans lequel le corps allongé (12) comprend en outre :
un embout buccal (19) à la première extrémité (13) du corps allongé (12) ;
une alimentation électrique ;
un ensemble de chauffage ;
un moyen de commande de chauffage (18) destinés à fournir sélectivement de l'énergie de l'alimentation électrique à l'ensemble de chauffage ;
un moyen de transfert de substance permettant d'aspirer de manière réglable la substance de la capsule (20) à travers la cavité (11) jusqu'à l'ensemble de chauffage ;
de telle sorte que, lorsque le dispositif de chauffage soit alimenté en énergie conjointement avec la substance, un aérosol, qui peut être aspiré à travers l'embout buccal (19), soit généré.

6. Dispositif de production d'aérosol selon l'une quelconque des revendications précédentes, comprenant en outre :
un moyen de rétention permettant de retenir de manière amovible la capsule (20) dans la cavité (11) ; et
un moyen de libération (17) permettant de libérer le moyen de rétention de telle sorte que la capsule (20) puisse être retirée de la cavité (11).

7. Dispositif de production d'aérosol selon l'une quelconque des revendications précédentes, comprenant en outre :
un moyen de reconnaissance, configuré pour lire des informations concernant le type de capsule associées à la capsule (20) ;
dans lequel les informations concernant le type de capsule comprennent le type de substance de production d'aérosol retenu dans la capsule (20) ;
et/ou la température de chauffage et la durée du chauffage à appliquer à la substance ; et/ou
le volume de substance de production d'aérosol retenu dans la capsule (20).

8. Dispositif de production d'aérosol selon la revendication 7, dans lequel la capsule (20) comprend en outre :
un moyen d'identification, conçu pour être lus par le moyen de reconnaissance du dispositif de production d'aérosol et pour fournir les informations concernant le type de capsule au dispositif de production d'aérosol lorsque la capsule (20) est reçue dans la cavité (11) ;
dans lequel les informations concernant le type de capsule comprennent le type de substance de production d'aérosol retenu dans la capsule (20) ;
et/ou la température de chauffage et la durée du chauffage à appliquer à la substance ; et/ou
le volume de substance de production d'aérosol retenu dans la capsule (20).

9. Dispositif de production d'aérosol selon l'une quelconque des revendications précédentes, dans lequel la capsule (20) comprend :
une coque extérieure, agencée pour retenir la substance de production d'aérosol ; et
un orifice de sortie dans la coque extérieure, conçu pour venir en prise avec le dispositif de production d'aérosol lorsque la capsule (20) est retenue dans la cavité (11).

10. Dispositif de production d'aérosol selon la revendication 9, dans lequel une partie de la coque extérieure de la capsule (20) est transparente de telle sorte qu'une substance contenue dans celle-ci soit visible d'un utilisateur, la partie transparente étant au moins partiellement exposée lorsque la capsule (20) est reçue dans la cavité (11) du dispositif de production d'aérosol.

11. Dispositif de production d'aérosol selon la revendication 9 ou 10, comprenant en outre des moyens de préhension (26) disposés sur la coque extérieure de la capsule (20), les moyens de préhension (26) étant conçus de manière à améliorer la facilité avec laquelle l'utilisateur peut appliquer la force requise à la capsule (20) afin de retirer la capsule (20) de la cavité (11) du dispositif de production d'aérosol.

12. Dispositif de production d'aérosol selon la revendication 11, dans lequel le moyen d'identification est fourni par les moyens de préhension (26), les informations concernant le type de capsule étant codées :
dans le nombre des moyens de préhension (26) sur la coque extérieure ; et/ou
dans les positions des moyens de préhension (26) par rapport à un point de référence sur la coque extérieure.

13. Dispositif de production d'aérosol selon l'une quelconque des revendications précédentes, dans lequel la capsule (20) comprend en outre :
un ensemble de chauffage ; et
des connexions électriques, conçues pour connecter l'ensemble de chauffage à l'alimentation électrique du dispositif de production d'aérosol lorsque la capsule (20) est reçue dans la cavité (11).

14. Dispositif de production d'aérosol selon l'une quelconque des revendications précédentes, dans lequel une partie de la capsule (20) est faite d'un matériau capable de réagir à un chauffage par induction ou par conduction.
